# EUROPÄISCHE PATENTSCHRIFT

(11) **EP 2 326 926 B1**
(45) Veröffentlichungstag und Bekanntmachung des Hinweises auf die Patenterteilung: **31.05.2017**
(21) Anmeldenummer: 09778081.1
(22) Anmeldetag: 25.08.2009
(51) Int. Cl.: G01G 19/22, G01G 19/32

(54) **ANLAGE ZUR GRAVIMETRISCHEN DOSIERUNG VERSCHIEDENER SCHÜTTGUTKOMPONENTEN**
SYSTEM FOR GRAVIMETRICALLY DOSING VARIOUS BULK GOODS COMPONENTS
INSTALLATION DE DOSAGE GRAVIMÉTRIQUE DE DIFFÉRENTS COMPOSANTS DE PRODUIT EN VRAC

(30) Priorität: 12.09.2008 DE 102008046960
(43) Veröffentlichungstag der Anmeldung: 01.06.2011
(73) Patentinhaber: AZO Holding GmbH, 74706 Osterburken (DE)
(72) Erfinder: PAHL, Frank, 74746 Höpfingen (DE); BAUER, Helmut, 74722 Buchen (DE); LEIST, Christian, 74706 Osterburken (DE)
(74) Vertreter: Lichti - Patentanwälte Partnerschaft mbB
(86) Internationale Anmeldenummer: PCT/EP2009/006134
(87) Internationale Veröffentlichungsnummer: WO 2010/028744

(56) Entgegenhaltungen:
- EP-A1- 0 794 476
- EP-A2- 1 550 833
- EP-A2- 1 707 926
- WO-A1-95/22042
- US-A1- 2007 217 284

## Beschreibung

Die Erfindung betrifft eine Anlage zum gravimetrischen Zusammenführen einzelner Schüttgutkomponenten in wenigstens einen Transportbehälter, mit mehreren Vorratsbehältern zur Bevorratung der Schüttgutkomponenten, welche mit je einer Dosiereinheit ausgestattet sind, um die jeweilige Schüttgutkomponente in den Transportbehälter zu überführen, wobei den Vorratsbehältern jeweils eine unterhalb eines jeweiligen Vorratsbehälters angeordnete Wiegeeinrichtung zugeordnet ist, und mit wenigstens einem Transportbehälter, welcher zwischen den Dosiereinheiten der Vorratsbehälter entlang einer Führung verfahrbar ist und mit den Wiegeeinrichtungen zusammenwirkt, wobei
- die Führung mehrere, in Führungsrichtung hintereinander angeordnete Führungssegmente aufweist, auf welchen der Transportbehälter geführt ist, und
- zumindest die unterhalb der Dosiereinheiten der Vorratsbehälter angeordneten Führungssegmente von Wäge-/Führungssegmenten gebildet sind, welche von den übrigen Führungssegmenten und/oder Wäge-/Führungssegmenten mechanisch entkoppelt sind, so daß sich der Transportbehälter in seiner jeweiligen Dosierposition auf den Wäge-/Führungssegmenten befindet, um sein Gewicht zu erfassen.

Derartige Anlagen sind bekannt und dienen zur Dosierung und gegebenenfalls Mischung einzelner Schüttgutkomponenten gemäß einer vorgegebenen Rezeptur, wobei es sich bei den Schüttgutkomponenten beispielsweise um Bestandteile von Farben, wie Farbstoffe, Pigmente etc., Lebensmittel, pharmazeutische Wirkstoffen und dergleichen handeln kann.

Die EP 1 707 926 A2 beschreibt eine Anlage zum gravimetrischen Zusammenführen mehrerer, in separaten Vorratsbehältern auf Vorrat gehaltener Schüttgutkomponenten in einen oder mehrere Transportbehälter, welche auf einer unterhalb der Vorratsbehälter angeordneten Führung verlagerbar sind und in welche die Schüttgutkomponenten aus den Vorratsbehältern mittels letzteren zugeordneten Dosiereinheiten überführbar sind. Die Führung ist hierbei von Fahrschienen gebildet, auf welchen ein oder mehrere Shuttles entlang rollen, welche die Transportbehälter aufnehmen. Um eine gravimetrische Dosierung zu gewährleisten, ist unterhalb einer jeden Dosiereinheit eine stationäre Wiegeeinrichtung positioniert, welche mit einer Hubeinrichtung ausgestattet ist, um einen jeweiligen Transportbehälter anläßlich der Dosierung einer Schüttgutkomponente aus einem jeweiligen Vorratsbehälter von dem Shuttle auf die Wiegeeinrichtung zu setzen und nach dem Dosiervorgang wieder auf das Shuttle zu laden, um ihn dem nächsten Vorratsbehälter oder einer Entleerstation zuzuführen.

Die WO 95/22042 A1 beschreibt eine Vorrichtung gemäß dem Oberbegriff des Anspruchs 1, welche zur Zusammenführung einzelner, in Vorratsbehältern aufbewahrter Komponenten in einem Transportbehälter dient. Die Vorrichtung weist hierzu mehrere Vorratsbehälter auf, welche an ihrem unteren Ende mit je einer Dosiereinheit ausgestattet sind. Unterhalb dieser Dosiereinheiten ist ein oder sind mehrere Transportbehälter entlang einer Fördereinrichtung zwischen den verschiedenen Vorratsbehältern verlagerbar. Einem jeden Vorratsbehälter ist eine separate Wiegeeinrichtung zugeordnet, um die von dem jeweiligen Vorratsbehälter in den Transportbehälter überführte Komponente gravimetrisch zu erfassen. Der Transportbehälter ist mittels Rollen auf einem Schienenpaar geführt, welches mehrere, in Fahrtrichtung hintereinander angeordnete Schienensegmente aufweist. In einer Dosierposition des Transportbehälters befinden sich dessen Rollen auf einem von den übrigen Schienensegmenten mit Abstand angeordneten und hiervon mechanisch entkoppelten Schienensegment, so daß die Wiegeeinrichtung sein aktuelles Gewicht erfassen kann. Zum Antrieb des Transportbehälters dient ein Ketten- oder Riementrieb, welcher kurz vor dem Erreichen der Dosierposition des Transportbehälters gestoppt werden muß, damit der Transportbehälter infolge Schwerkraft über eine auf dem Schienensegment angeordnete Rampe bis in seine Dosierposition weiter rollt. Sobald der Transportbehälter befüllt worden ist, wird der Transportbehälter sodann durch erneutes Anfahren des Riemen- oder Kettentriebs über die Rampe hinweg weiter transportiert. Nachteilig ist insbesondere, daß der oder auch mehrere Transportbehälter nur gemeinsam in einer Richtung - nämlich in Richtung des Ketten- oder Riementriebs - verlagerbar ist bzw. sind, wobei die Verlagerung einzelner Transportbehälter zudem vom Rastermaß der Mitnahmemittel des Ketten- oder Riementriebs abhängig sind. Folglich ist auf diese Weise kein unabhängiger und individueller Transport der einzelnen Transportbehälter möglich und können letztere insbesondere nicht entsprechend der jeweils zusammenzustellenden Mischung bzw. Rezeptur zu einem individuellen Zeitpunkt individuell an einen jeweiligen Vorratsbehälter zum Zwecke der Dosierung verbracht werden.

Der Erfindung liegt die Aufgabe zugrunde, eine Anlage der eingangs genannten Art auf einfache und kostengünstige Weise dahingehend weiterzubilden, daß ihre Durchsatzleistung verbessert wird und insbesondere im Bedarfsfall eine einfache Erweiterung der Anlage um weitere Vorratsbehälter und/oder Transportbehälter möglich ist, ohne ihre Durchsatzleistung zu beeinträchtigen.

Erfindungsgemäß wird diese Aufgabe bei einer Anlage der eingangs genannten Art dadurch gelöst, daß zur Verlagerung des/der Transportbehälter(s) entlang der Führung wenigstens ein gesteuert angetriebener Schlitten vorgesehen ist, welcher an einer sich parallel zu einer Reihe der Führungs- bzw. Wäge-/Führungssegmente erstreckenden Schiene geführt und mittels Mitnehmern mit dem/den Transportbehälter(n) koppelbar und von diesem/diesen entkoppelbar ist, so daß der Transportbehälter unter Eingriff mit dem Schlitten entlang der parallelen Führungs- bzw. Wäge-/Führungssegmente verlagerbar ist.

Die erfindungsgemäße Ausgestaltung macht gegenüber der Anlage gemäß der eingangs zitierten EP 1 707 926 A2 eine Umsetzung der Transportbehälter zwischen ihrer Führung und den Wiegeeinrichtungen entbehrlich, indem letztere mit ihren Wäge-/Führungssegmenten in die übrigen Führungssegmente der Führung integriert sind. Dabei ist es selbstverständlich je nach Länge der Führungssegmente bzw. je nach Abstand der Vorratsbehälter möglich, daß sämtliche Führungssegmente von derartigen Wäge-/Führungssegmenten gebildet sind, oder daß zwischen den unterhalb der Dosiereinheiten der Vorratsbehälter angeordneten Wäge-/Führungssegmenten "normale" Führungssegmente, d.h. lediglich zur Führung dienende, nicht mit einer Wiegefunktion ausgestattete Segmente zwischengeordnet sind. Gleichfalls ist es, sofern gewünscht, selbstverständlich möglich, sich unter den Dosiereinheiten mehrerer Vorratsbehälter hinweg erstreckende Wäge-/Führungssegmente vorzusehen. Der Transportbehälter ist dabei auf den Führungssegmenten stehend oder insbesondere auch in diesen eingehängt entlang der Führung zumindest zwischen den Dosiereinheiten der einzelnen Vorratsbehälter sowie in der Regel auch einer Entleerstation verfahrbar. Hat der Transportbehälter seine Dosierposition unterhalb der Dosiereinheit des jeweiligen Vorratsbehälters erreicht, in welcher er auf den Wäge-/Führungssegmenten getragen ist, so läuft die Dosiereinheit dieses Vorratsbehälters an und dosiert die von der Waagenelektronik gesteuerte Menge an Schüttgut in den Transportbehälter. Befindet sich die gewünschte Menge der in diesem Vorratsbehälter enthaltenen Schüttgutkomponente in dem Transportbehälter, so wird die Dosiereinheit von der Waagenelektronik - gegebenenfalls mit einem geringen Vorlauf - abgeschaltet und kann der Transportbehälter entlang der Führung weiter zu dem nächsten Vorratsbehälter verlagert werden. Dieser Zyklus wiederholt sich gegebenenfalls an weiteren Vorratsbehältern mit anderen Schüttgutkomponenten, bis die gewünschte Mischungsrezeptur oder auch nur eine Teilcharge derselben in dem Transportbehälter zusammengestellt ist. Anschließend wird der Transportbehälter einer Entleerstation zugeführt, indem er z.B. - sofern letztere nicht ebenfalls an einer Position entlang der Führung angeordnet ist - aus der Anlage ausgeschleust und sein Inhalt an der Entleerstation beispielsweise in einen Mischer entleert wird.

Die Wäge-/Führungssegmente und insbesondere auch die Führungssegmente können zweckmäßig paarweise parallel zueinander angeordnet sein, wobei die Wäge-/Führungssegmente und/oder - sofern vorgesehen - die "normalen" Führungssegmente ohne Wiegefunktion separat ausgebildet oder miteinander verbunden sein können, so daß in jedem Fall zwei parallele, z.B. schienenartige Einzelführungen für die Transportbehälter gebildet sind, auf welchen letztere geführt sind.

Gemäß einer bevorzugten Ausführungsform kann vorgesehen sein, daß die Führungssegmente und die Wäge-/Führungssegmente von Spurabschnitten gebildet sind, welche an ihrer Oberseite eine Führungsspur für Führungsmittel des Transportbehälters bilden. Hierbei kann die Führungsspur der Spurabschnitte oder können die Führungsmittel des Transportbehälters mit Roll- oder Gleitmitteln ausgestattet sein, um für eine reibungsarme Verlagerung des Transportbehälters zu sorgen. So kann die Führungsspur der Spurabschnitte beispielsweise eine Mehrzahl an hintereinander angeordneten Rollen aufweisen, auf welchen die z.B. in Form von Kufen, Schlitten oder dergleichen ausgebildeten Führungsmittel des Transportbehälters entlang rollen.

Während es grundsätzlich selbstverständlich möglich ist, daß die Transportbehälter einen eigenen Antrieb aufweisen - so können beispielsweise die Rollen der Führungsspur der Führung oder der Führungsmittel des Transportbehälters gesteuert angetrieben sein - kann gemäß einer vorteilhaften Ausgestaltung zur Verlagerung des/der Transportbehälter(s) entlang der Führung wenigstens ein parallel zu der Führung, insbesondere auf einer Schiene, geführtes und gesteuert angetriebenes Shuttle vorgesehen sein, so daß die Transportbehälter selbst folglich passiv, d.h. antriebslos, entlang der Führung geführt sind. Das Shuttle ist hierbei insbesondere mittels Mitnehmern, z.B. in Form von schwenkbaren oder ausziehbaren Greifern, mit dem/den Transportbehälter(n) koppelbar und von diesem/diesen entkoppelbar, wobei das Shuttle vorzugsweise wenigstens zwei in Führungsrichtung mit Abstand angeordnete Mitnehmer aufweist, welche mit dem/den Transportbehälter(n) koppelbar und von diesem/diesen entkoppelbar sind, um während des Mitschleppens des Transportbehälters auf diesen wirkende Drehmomente aufzunehmen und somit für eine sichere und zuverlässige Verlagerung desselben entlang der Führung zu sorgen. Durch eine solche lösbare Verbindung des zum Antrieb der Transportbehälter dienenden Shuttles ist es insbesondere möglich, daß ein jeweiliger Transportbehälter in seiner Dosierposition auf einem jeweiligen Wäge-/Führungssegment abgestellt wird, um ihm die jeweilige Schüttgutkomponente aufzugeben, wobei das Shuttle während dieser Dosierzeit weitere Transportbehälter verfahren kann. Nach Beendigung des Dosiervorgangs kann der Transportbehälter mittels des Shuttles dann in seine nächste Dosierposition verbracht werden, so daß für die gesamte Anlage in Bezug auf die Transportbehälter nur wenige Shuttles oder gar nur ein Shuttle ausreichen, was mit einer Kostenersparnis einhergeht. Zugleich können relativ viele, in ihrer Dosierposition befindliche Transportbehälter zugleich mit den jeweiligen Schüttgutkomponenten befüllt werden, so daß eine sehr hohe Durchsatzleistung bzw. hohe Chargenanzahlen der Anlage sichergestellt sind.

Zusätzlich zu dem/den Shuttles(s) können darüber hinaus Blockiereinrichtungen für den/die Transportbehälter vorgesehen sein, um diese(n) in seiner/ihrer jeweiligen Dosierposition festsetzen zu können. Die Blockiereinrichtungen, welche zweckmäßig einem jeden Vorratsbehälter bzw. einer jeden Dosiereinheit eines Vorratsbehälters zugeordnet sein können, können beispielsweise in Form von Pneumatikzylindern, Hubmagneten oder dergleichen ausgebildet sein, welche dem Transportbehälter in der jeweiligen Dosierposition zu halten vermögen. Gleichfalls ist es z.B. denkbar, daß die Blockiereinrichtungen in Form von Blockiermitteln für die Rollen der Wäge-/Führungssegmente bzw. der Transportbehälter ausgebildet sind, so daß der Transportbehälter reibschlüssig in seiner jeweiligen Dosierposition gehalten wird.

Folglich kann vorzugsweise vorgesehen sein, daß die erfindungsgemäße Anlage mehrere Transportbehälter aufweist, wobei sie je nach Größe - bzw. insbesondere je nach Anzahl an Vorratsbehältern - selbstverständlich auch mehrere Shuttles aufweisen kann, deren Anzahl jedoch, wie oben erwähnt, deutlich geringer gewählt sein kann als die Anzahl an Transportbehältern.

Um für eine einfache und schnelle Dosierung der jeweiligen Schüttgutkomponente in der jeweiligen Dosierposition des Transportbehälters zu sorgen, kann zweckmäßig der Transportbehälter eine den Dosiereinheiten der Vorratsbehälter zugewandte, verschließbare Aufnahmeöffnung und können die Dosiereinheiten eine dem Transportbehälter zugewandte, verschließbare Dosieröffnung aufweisen, wobei die Aufnahmeöffnung mit der jeweiligen Dosieröffnung anläßlich der Überführung der jeweiligen Schüttgutkomponente von dem jeweiligen Vorratsbehälter in den Transportbehälter in Deckung bringbar sind.

Während ein solches Indeckungbringen anläßlich der Dosierung der jeweiligen Schüttgutkomponente, wie als solches aus der EP 1 707 926 A2 bekannt, dadurch geschehen kann, daß die Aufnahmeöffnung und die Dosieröffnung zwischen sich einen Spalt bilden, welcher beim Dosieren vorzugsweise abgesaugt werden kann, um Kontaminationen zu vermeiden, kann insbesondere im Falle von empfindlichen, gesundheitsschädlichen oder umweltgefährdenden Schüttgutkomponenten zum Zwecke einer besonders kontaminationsfreien Handhabung derselben vorgesehen sein, daß die Dosieröffnung der Dosiereinheit mit der Aufnahmeöffnung des Transportbehälters lösbar, aber unter mechanischer Entkopplung der Dosiereinheit von dem Transportbehälter im wesentlichen staubdicht verbindbar ist. Mit "mechanischer Entkopplung" ist in diesem Zusammenhang eine Verbindung angesprochen, welche eine Übertragung von Kräften zwischen der Dosiereinheit und dem an diese angedockten Transportbehälter zumindest weitestgehend vermeidet, so daß gleichwohl eine sehr präzise gravimetrische Erfassung der Menge an in den Transportbehälter überführten Schüttgutkomponenten mittels der Wäge-/Führungssegmente, auf welchen der Transportbehälter in seiner jeweiligen Dosierposition getragen ist, sichergestellt ist, ohne die Wiegeeinrichtung durch Kopplungskräfte zwischen Dosiereinheit und Transportbehälter bzw. auf die Wäge-/Führungssegmente übertragene Kraftnebenschlüsse zu beeinflussen.

Gemäß einer Ausführungsform kann hierzu vorgesehen sein, daß die Dosieröffnung der Dosiereinheit und/oder die Aufnahmeöffnung des Transportbehälters mittels eines nachgiebigen Verbindungselementes an der Dosiereinheit bzw. an dem Transportbehälter angeordnet ist/sind, um eine Übertragung von Kräften zwischen der Dosiereinheit und dem Transportbehälter verhindern zu können, wobei die miteinander verbundenen Dosier-/Aufnahmeöffnungen in eine solche Relativposition in Bezug auf die Dosiereinheit bzw. auf den Transportbehälter anordbar sind, daß eine Übertragung von Kräften zwischen der Dosiereinheit und dem Transportbehälter durch das nachgiebige Verbindungselement verhindert wird. Die Dosieröffnung und/oder die Aufnahmeöffnung kann dabei beispielsweise an einem im wesentlichen senkrecht zur Dosieröffnung bzw. im wesentlichen senkrecht zur Aufnahmeöffnung verlagerbaren Träger angeordnet und kann der Träger mit der Dosiereinheit und/oder mit dem Transportbehälter über das nachgiebige Verbindungselement verbunden sein, wobei der Träger in eine Relativposition in Bezug auf die Dosiereinheit bzw. auf den Transportbehälter bringbar ist, in welcher der Träger ausschließlich über das nachgiebige Verbindungselement mit der Dosiereinheit bzw. mit dem Transportbehälter in Kontakt steht, um die mechanische Entkopplung des Transportbehälters von der Dosiereinheit des jeweiligen Vorratsbehälters zu gewährleisten.

Des weiteren kann es hinsichtlich einer möglichst kontaminationsfreien Handhabung der Schüttgutkomponenten zweckmäßig sein, wenn ein Verschlußorgan der Dosieröffnung der jeweiligen Dosiereinheit mit einem Verschlußorgan der Aufnahmeöffnung des jeweiligen Transportbehälters koppelbar ist und die Verschlußorgane gemeinsam zwischen einer Öffnungsposition und einer Schließposition verlagerbar sind.

Je nach gewünschter Größe der erfindungsgemäßen Anlage bzw. je nach Anzahl an Vorrats- und Transportbehältern können die Vorratsbehälter in wenigstens einer Reihe entlang der Führung oder auch in wenigstens zwei oder mehreren Reihen entlang wenigstens zweier oder mehrerer Führungen angeordnet sein, wobei im letztgenannten Fall den wenigstens zwei Führungen vorzugweise wenigstens eine Umsetzeinrichtung zugeordnet ist, welche zum Umsetzen des/der Transportbehälter(s) zwischen den Führungen ausgebildet ist. Auf diese Weise kann insbesondere bei größeren Anlagen eine noch höhere Durchsatzleistung erreicht werden, indem sich einzelne Transportbehälter nicht gegenseitig blockieren, sondern diese auf parallele Führungen ausweichen können. In beiden Fällen kann es indes zweckmäßig sein, die Transportbehälter in nur eine Richtung entlang der Führung(en) zu verfahren, welche in Ausnahmefällen umgekehrt werden kann.

Die Umsetzeinrichtung kann ihrerseits auf im wesentlichen quer zu den Führungen verlaufenden Schienen oder Fahrspuren geführt sein und insbesondere ihrerseits wenigstens ein Führungssegment aufweisen, welches mit den Führungssegmenten und/oder Wäge-/Führungssegmenten der wenigstens zwei Führungen in Flucht bringbar ist, so daß der Transportbehälter zwischen den Führungssegmenten und/oder Wäge-/Führungssegmenten der wenigstens zwei Führungen und dem Führungssegment der Umsetzeinrichtung verlagerbar ist. Die in Flucht mit einer der parallelen Führungen gebrachte Umsetzeinrichtung setzt die Führungssegmenten bzw. Wäge-/Führungssegmente dieser Führung folglich mittels ihrer eigenen Führungssegmente fort.

Die Führung für die Transportbehälter kann im übrigen vorzugsweise, wenn auch selbstverständlich nicht notwendigerweise, hängend angeordnet sein, wobei mit "hängend" eine im wesentlichen bodenfreie Anordnung der Führung angesprochen ist, wodurch eine einfache Möglichkeit der Reinigung der Anlage geboten ist. Die Führung kann dabei beispielsweise an einem am Boden befestigten oder ebenfalls hängend, z.B. an einer Decke eines Gebäudes, festgelegten Traggestell angeordnet sein.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische Seitenansicht einer Ausführungsform einer erfindungsgemäßen Anlage zum gravimetrischen Zusammenführen einzelner Schüttgutkomponenten in Transportbehälter;
- Fig. 2: eine schematische Ansicht der Anlage gemäß Fig. 1 (dort von rechts betrachtet), wobei sich ein Transportbehälter in seiner Dosierposition befindet;
- Fig. 3: eine Detailansicht eines zum Verlagern des Transportbehälters entlang der Führung dienenden Shuttles entsprechend dem Ausschnitt X gemäß Fig. 2;
- Fig. 4: eine perspektivische Detailansicht eines Transportbehälters der Anlage gemäß Fig. 1 einschließlich seiner Führung;
- Fig. 5: eine schematische Detailansicht einer Dosiereineinheit und eines in seiner Dosierposition befindlichen Transportbehälters, welche zum mechanich voneinander entkoppelten Andocken aneinander ausgebildet sind;
- Fig. 6-8: jeweils eine der Fig. 5 entsprechende Ansicht in verschiedenen Stadien eines Dosiervorgangs;
- Fig. 9: eine schematische Draufsicht auf eine Anlage mit mehreren Reihen von Führungen sowie Umsetzeinrichtungen zur Überführung der Transportbehälter zwischen den Führungen; und
- Fig. 10: eine der Fig. 9 entsprechende Draufsicht auf eine Anlage mit einer alternativen Anordnung der mehreren Reihen von Führungen und Umsetzeinrichtungen.

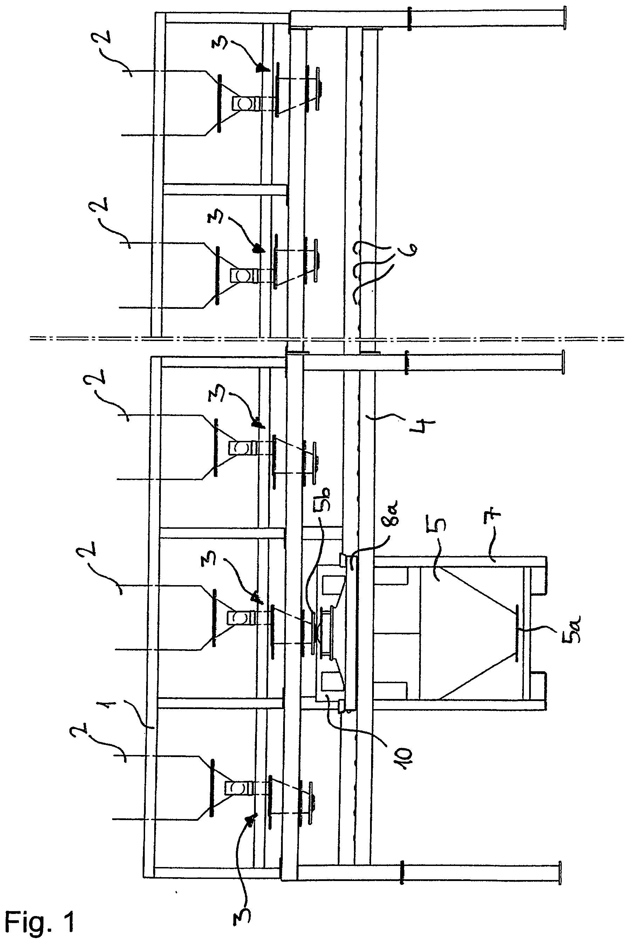

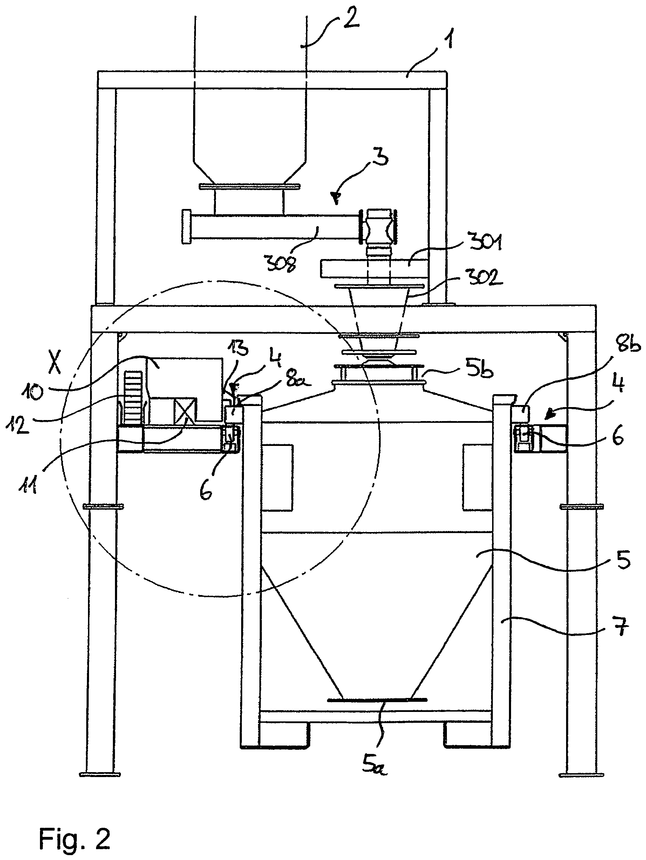

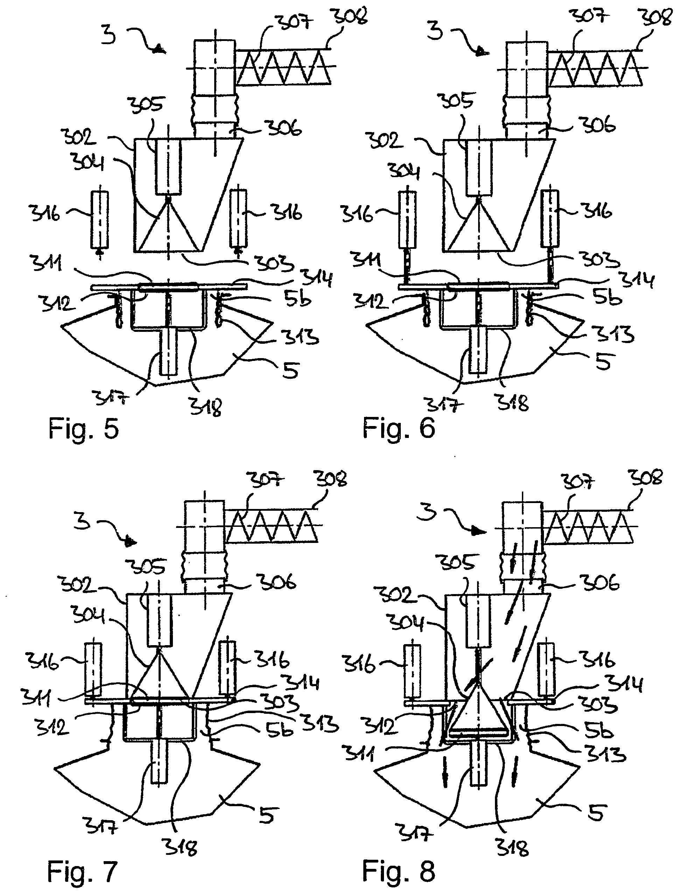

In Fig. 1 ist ein unterbrochen dargestellter Längsträger 1, z.B. als Teil eines Traggestells, in Form einer Zwischendecke 1 eines Betriebsgebäudes etc., wiedergegeben, auf welchem zwei oder mehrere Vorratsbehälter 2 hintereinander bzw. nebeneinander aufgereiht sind, welche verschiedene, insbesondere im wesentlichen pulver- oder partikelförmige Schüttgutkomponenten aufnehmen. Jeder Vorratsbehälter 2 weist an seiner Unterseite eine in Fig. 2 und insbesondere in Fig. 6 bis 8 noch detaillierter gezeigte Dosiereinheit 3 für die ihn jeweils enthaltende Schüttgutkomponente auf. Die Vorratsbehälter 2 sind in Fig. 1 und 2 nur in ihrem unteren Abschnitt dargestellt. Es handelt sich beim vorliegenden Ausführungsbeispiel um herkömmliche Silos oder dergleichen, wobei es sich statt dessen selbstverständlich auch um beliebige andere bekannte Behälter handeln kann, wie Sackschütten, in geeigneten Trägern gehaltene Big-Bags oder dergleichen.

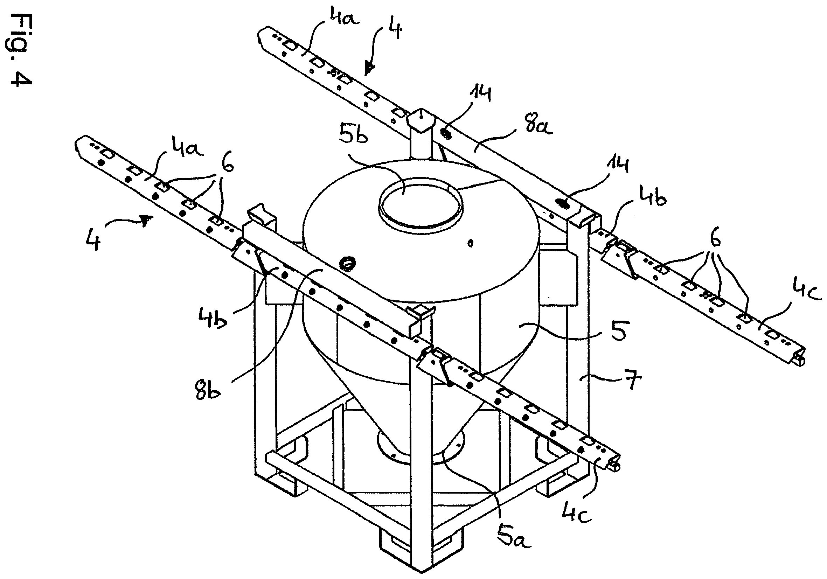

An der Unterseite der Dosiereinheiten 3 der Vorratsbehälter 2 ist an dem Traggestell eine Führung 4 angeordnet, entlang welcher einer oder insbesondere mehrere Transportbehälter 5 verfahrbar sind, um letztere zwischen den Dosiereinheiten 3 der verschiedenen Vorratsbehälter 2 sowie gegebenenfalls einer (nicht dargestellten) Entleerstation verlagern zu können und die jeweilige Schüttgutkomponente dem Transportbehälter 5 aufzugeben bzw. die Mischung diesem zu entnehmen. Dabei ist jedem Vorratsbehälter 2 eine unterhalb desselben angeordnete, stationäre Wiegeeinrichtung zugeordnet, mit welcher der Transportbehälter 5 zumindest in seiner jeweiligen Dosierstellung, in welcher ihm die Schüttgutkomponente aus dem jeweiligen Vorratsbehälter 2 aufgegeben werden kann (Fig. 1), zusammenwirkt. Wie insbesondere aus Fig. 4 ersichtlich, weist die Führung 4 hierzu mehrere, in Führungsrichtung hintereinander und paarweise parallel angeordnete Führungssegmente 4a, 4b, 4c auf, von welchen zumindest einige - nämlich diejenigen unterhalb der Dosiereinheiten, auf denen der Transportbehälter 5 beim Dosieren ruht, z.B. die Segmente 4b in Fig. 4 - von Wäge-/Führungssegmenten gebildet sind, welche von den übrigen Führungs- oder Wäge-/Führungssegmenten 4a, 4b, 4c mechanische entkoppelt sind, um das Gewicht des Transportbehälters 5 in seiner Dosierposition zu erfassen und somit eine gravimetrische Dosierung zu gewährleisten.

Wie am besten aus Fig. 4 sowie aus Fig. 2 ersichtlich, sind sowohl die Führungs- als auch die Wäge-/Führungssegmente 4a, 4b, 4c von paarweise parallel angeordneten Tragbalken gebildet, welche mechanisch voneinander getrennt oder auch miteinander verbunden sein können und beim vorliegenden Ausführungsbeispiel an ihrer Oberseite mit Rollen 6 ausgestattet sind, um für eine möglichst reibungsarme Führung des Transportbehälters 5 zu sorgen. Letzterer kann z.B. in einen Tragrahmen 7 eingesetzt sein, welcher an seinen beiden den Führungssegmenten 4a, 4b, 4c zugewandten, entgegengesetzten Seiten nach außen greifende Auflager 8a, 8b besitzt, deren Länge größer ist als der Abstand der Rollen 6, so daß der Tragrahmen 7 mit dem Transportbehälter 5 auf den Rollen 6 entlang zu rollen vermag. Die Wäge-/Führungssegmente 4b können im übrigen praktisch identisch wie die "reinen" Führungssegmente 4a, 4c ausgebildet sein, nur daß erstere zusätzlich das auf ihnen befindliche Gewicht erfassen können, während die "reinen" Führungssegmente z.B. mehr oder minder starr an dem Traggestell befestigt sind. Der Transportbehälter 5 weist ferner einen z.B. konisch zulaufenden Boden 5a auf, welcher geöffnet werden kann, um ihm die dosierten Schüttgutkomponenten entnehmen zu können.

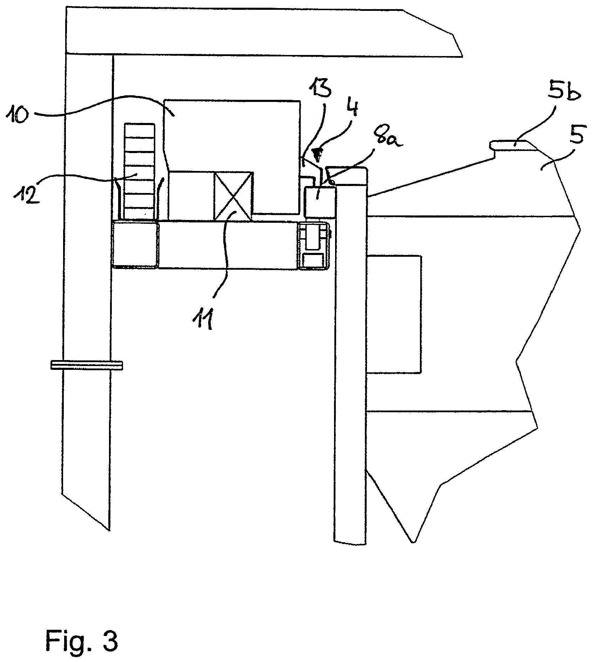

Wie insbesondere Fig. 2 und 3 zu entnehmen ist, ist/sind der/die Transportbehälter 5 im vorliegenden Falle antriebslos an der Führung 4 geführt und ist zu dessen/deren Verlagerung entlang der Führung ein oder mehrere, gesteuert angetriebene Schlitten oder Shuttle(s) 10 vorgesehen, welche ihrerseits an einer Schiene 11 geführt sind, welche sich parallel zu einer Reihe der paarweisen Führungs- bzw. Wäge-/Führungssegmente 4a, 4b, 4c erstreckt. Der Antrieb des Shuttles kann über Zahn- oder Reibräder 12, Riementriebe oder auf beliebige andere bekannte Weise erfolgen. Das Shuttle 10 ist hierbei mittels Mitnehmern 13 mit dem jeweiligen Transportbehälter 5 koppelbar und von diesem entkoppelbar, wobei die Mitnehmer 13 beim gezeigten Ausführungsbeispiel von vertikal verlagerbaren oder schwenkbaren Zapfen gebildet sind, welche mit z.B. an einem der Auflagern 8a, 8b des Tragrahmens 7 des Transportbehälters 5 angeordneten Öffnungen 14 (Fig. 4) in lösbaren Eingriff bringbar sind. Das Shuttle 10 kann hierbei vorzugweise zwei in Führungsrichtung mit Abstand angeordnete Mitnehmer 13 aufweisen, um beim Mitschleppen des Transportbehälters 5 die auftretenden Drehmomente aufzunehmen. Durch eine solche lösbare Verbindung zwischen dem Shuttle 10 und den Transportbehältern 5 wird ermöglicht, daß der jeweilige Transportbehälter 5 anläßlich eines Dosiervorgangs kurzzeitig auf der entsprechenden Wiegeeinrichtung - genauer: auf den jeweiligen Wäge-/Führungssegmenten 4b - abgestellt werden kann und während der Dosierzeit für weitere Transportaufträge anderer Transportbehälter 5 zur Verfügung steht. In der Transportstellung greifen die Mitnehmer 13 des Shuttles 10 folglich in das Auflager 8a des jeweiligen Transportbehälters 5 ein, so daß der Transportbehälter 5 unter Eingriff mit dem Shuttle 10 entlang der parallelen Führungs- bzw. Wäge-/Führungssegmenten 4a, 4b, 4c verlagert werden kann, wie in den Fig. 2 und 3 näher dargestellt. In seiner Dosierposition erreicht der Transportbehälter 5 die Position auf einem paarweisen Wäge-/Führungssegment 4b (Fig. 4) unterhalb der Dosiereinheit 3 eines Vorratsbehälters 2 (Fig. 1), um einen bestimmten Gewichtsanteil der darin enthaltenen Schüttgutkomponente aufzunehmen.

Um für eine weitestgehend kontaminationsfreie Dosierung der Schüttgüter zu sorgen, können die Dosiereinheit 3 und der an der oberen, der Dosiereinheit 3 zugewandten Seite des Transportbehälters 5 angeordnete Einlauf 5b z.B. eine in Fig. 5 bis 8 schematisch wiedergegebene Ausgestaltung besitzen. Wie hieraus ersichtlich, umfaßt die Dosiereinheit 3 ein z.B. an einem entsprechenden Träger 301 (Fig. 2) des Traggestells festgelegtes Gehäuse 302 mit einer an dessen Unterseite angeordneten Dosieröffnung 303. Die Dosieröffnung 303 ist mittels eines Verschlußorgans 304 zu öffnen und zu schließen, wobei das Verschlußorgan 304 der Dosiereinheit 3 beim vorliegenden Ausführungsbeispiel von einem etwa kegelförmigen Stempel gebildet ist, welcher mittels einer im oberen Bereich des Gehäuses 302 festgelegten Kolben-/Zylindereinheit 305 zwischen seiner (oberen) Schließstellung (vgl. Fig. 5 bis 7) und seiner (unteren) Öffnungsstellung (vgl. Fig. 8) - hier vertikal - verlagerbar ist. Der Antrieb der Kolben-/Zylindereinheit 305 kann z.B. hydraulisch, pneumatisch, hydropneumatisch oder andersartig, wie mittels Linearantrieben oder dergleichen, erfolgen. An die Oberseite des Gehäuses 302 schließt sich über einen Anschluß 306 ein Dosierorgan 307, z.B. in Form einer Förderschnecke, an, deren rohrförmiges Gehäuse 308 in den zugehörigen Vorratsbehälter 2 (siehe insbesondere Fig. 2) mündet. Die kegelige, sich nach oben in Richtung des Anschlusses 306 verjüngende Gestalt des Verschlußorgans 304 sowie die Ausgestaltung des Gehäuses 302 derart, daß sich die Dosieröffnung 303 praktisch über die gesamte Unterseite des Gehäuses 302 erstreckt, dient insbesondere zur Vermeidung von Toträumen anläßlich des Dosiervorgangs (Fig. 8). Entsprechendes gilt für die schräge Anordnung der in Fig. 5 bis 8 rechten Seitenwand des Gehäuses 302 der Dosiereinheit 3 unterhalb des Anschlusses 306.

Der Transportbehälter 5 ist an seiner oberen, der Dosiereinheit 3 zugewandten Seite mit einem mittels eines Verschlußorgans 311 zu öffnenden und zu verschließenden Aufnahmeöffnung 312 ausgestattet, welche mit der Dosieröffnung 303 der Dosiereinheit 3 bedarfsweise lösbar verbindbar ist, um Schüttgut mittels der Dosiereinheit 3 in den Transportbehälter 5 zu überführen. Die Aufnahmeöffnung 12 des Transportbehälters 5 ist mittels eines nachgiebigen, im vorliegenden Fall etwa schlauchförmigen Verbindungselementes 313 an dem Transportbehälter 5 angeordnet, was bei dem gezeigten Ausführungsbeispiel dadurch bewerkstelligt ist, daß die Aufnahmeöffnung 312 an einem nach Art eines etwa plattenförmigen Deckels ausgestalteten Träger 314 angeordnet ist, welcher mit dem Einlauf 5b des Transportbehälters 5 randseitig über das nachgiebige Verbindungselement 313 verbunden ist. Letzteres ist dabei an seinem einen Ende an der dem Transportbehälter 5 zugewandten Unterseite des Trägers 314, die Aufnahmeöffnung 12 umgebend, insbesondere abdichtend, festgelegt, während sein anderes Ende um den Umfang des Einlaufs 5b des Transportbehälters 5, diesen insbesondere ebenfalls abdichtend, befestigt ist. Um eine Übertragung von Kräften zwischen der Dosieröffnung 303 der Dosiereinheit 3 und der Aufnahmeöffnung 312 des Transportbehälters 5 verhindern zu können, ist der Träger 314 mit der Aufnahmeöffnung 312 zumindest in einer in Fig. 7 und 8 dargestellten Situation, in welcher die Dosieröffnung 303 mit der Aufnahmeöffnung 312 verbunden ist, der Transportbehälter 5 also an die Dosiereinheit 3 "angedockt" hat, in einer solche Relativposition in Bezug auf den Transportbehälter 5 verlagerbar, daß der Träger 314 mit der Aufnahmeöffnung 312 ausschließlich über das nachgiebige Verbindungselement 313 mit dem Transportbehälter 5 - oder genauer: mit dessen Einlauf 5b - in Kontakt steht; Kraftnebenschlüsse zwischen der Dosiereinheit 3 und dem Transportbehälter 5 lassen sich so zumindest während des Dosiervorgangs und gegebenenfalls bereits während des Andockens des Transportbehälters 5 an die Dosiereinheit 3 auf einfache Weise verhindern, so daß das durch das zugehörige Wäge-/Führungssegment 4b (Fig. 4) ermittelte Gewicht des Transportbehälters 5 nicht verfälscht wird. Der Träger 314 mit der Aufnahmeöffnung 312 ist hierzu beim gezeigten Ausführungsbeispiel zwischen einer in Fig. 5 und 6 dargestellten Position, in welcher er auf dem Einlauf 5b des Transportbehälters 5 aufliegt und die Aufnahmeöffnung 312 mit dem Einlauf 5b fluchtet, und einer in Fig. 7 und 8 wiedergegebenen Position, in welcher der Träger 314 mit der Aufnahmeöffnung 312 demgegenüber in Bezug auf den Transportbehälter 5 angehoben worden ist, - hier etwa vertikal - verlagerbar. Zum Zwecke der Verlagerung des Trägers 314 relativ zu dem Transportbehälter 5 sind im vorliegenden Fall zwei beispielsweise ebenfalls an dem Traggestell oder auch an dem Gehäuse 302 der Dosiereinheit 3 angeordnete Kolben-/Zylindereinheiten 316 vorgesehen, welche an der Oberseite des Trägers 314 angreifen können, wenn sich der Transportbehälter 5 in seiner unterhalb einer jeweiligen Dosiereinheit 3 befindlichen Dosierposition befindet. Die Kolben-/Zylindereinheit 316 kann z.B. entsprechend der Einheit 305 betätigt sein.

Das Verschlußorgan 311 des Transportbehälters 5 ist im übrigen ähnlich wie das der Dosiereinheit 3 im wesentlichen in Form eines verlagerbaren Stempels gebildet, welches mittels einer weiteren Kolben-/Zylindereinheit 317 zwischen seiner (oberen) Schließstellung (Fig. 5 bis 7) und seiner (unteren) Öffnungsstellung (Fig. 8) - hier ebenfalls vertikal - verlagerbar ist. Für den Antrieb der Kolben-/Zylindereinheit 317 gilt entsprechendes wie für die Kolben-/Zylindereinheiten 305 und 316, wobei hier alternativ insbesondere auch lediglich eine mechanische oder eine Fluidfeder vorgesehen sein kann, welche das Verschlußorgan 311 des Transportbehälters 5 in seine Schließstellung (Fig. 5 bis 7) vorbelastet. Beim gezeigten Ausführungsbeispiel ist z.B. der Zylinder der Kolben-/Zylindereinheit 317 an einem - hier in Bezug auf den Träger 314 stationären und an diesem festgelegten - Gestänge 318 befestigt, so daß das Verschlußorgan 311 gemeinsam mit dem Träger 314 in Bezug auf den Transportbehälter 5 - hier vertikal - verlagerbar ist, während das Verschlußorgan 311 zusätzlich durch Verlagern der Kolbenstange des Kolben-/Zylindereinheit 317 zwischen seiner Öffnungs- und Schließstellung bewegbar ist. Das Verschlußorgan 311 des Transportbehälters 5 ist überdies insbesondere mit dem Verschlußorgan 304 der Dosiereinheit 3 koppelbar, wobei letzteres zum Andocken des Transportbehälters 5 an die Dosiereinheit 3 von außen gegen die Außenseite des Verschlußorgans 311 in Kontakt bringbar ist, wobei die Querschnitte beider Verschlußorgane 304, 311 bzw. der Dosier-/Aufnahmeöffnungen 303, 312 vorzugsweise im wesentlichen kongruent sind, um im angedockten Zustand Hinterschneidungen zu vermeiden, welche zu einer ungewollten Anreicherung von Schüttgut führen könnten.

Um für einen Druckausgleich zwischen dem Innern der Dosiereinheit 3 bzw. des Transportbehälters 5 und der Umgebung zu sorgen, kann ferner vorzugsweise ein Druckausgleichselement vorgesehen sein, wobei beim vorliegenden Ausführungsbeispiel das nachgiebige Verbindungselement 313 selbst zugleich als Druckausgleichselement dient, indem es zumindest teilweise oder auch gänzlich aus Filtermaterial, z.B. in Form eines Filtergewebes, gefertigt ist. Die Durchlässigkeit des Filtermaterials sollte hierbei derart gewählt sein, daß auch die kleinste in dem zu dosierenden Schüttgut enthaltene Partikelfraktion das Filtermaterial nicht passieren kann, so daß das Schüttgut nicht mit der Umgebung in Berührung kommen kann. Zugleich ist aufgrund der dichten Verbindung zwischen Dosier- 303 und Aufnahmeöffnung 312 sichergestellt, daß auch keine Spalte oder andere Undichtigkeiten gebildet sind, durch welche das Schüttgut mit der Umgebung in Kontakt treten könnte.

Der Dosiervorgang kann folgendermaßen geschehen: In Fig. 5 befinden sich sowohl das Verschlußorgan 304 der Dosieröffnung 303 der Dosiereinheit 3 als auch das Verschlußorgan 311 der Aufnahmeöffnung 312 des Transportbehälters 5 in ihrer Schließstellung. Der Träger 314 mit der Aufnahmeöffnung 312 liegt auf dem oberen Einlauf 5b des Transportbehälters 5 auf. Der Transportbehälter 5 ist gerade von dem Shuttle 10 entlang der Führung 4 (Fig. 1 bis 4) in seine unterhalb der Dosiereinheit 3 angeordnete Dosierstellung verfahren worden, in welcher sich seine Aufnahmeöffnung 312 in Flucht mit der Dosieröffnung 303 der Dosiereinheit 3 befindet. Wie aus Fig. 6 ersichtlich, wird nun der Träger 314 mit der Aufnahmeöffnung 312 des Transportbehälters 5 durch Expandieren der Kolben der Kolben-/Zylindereinheiten 316 ergriffen und durch Kontrahieren der Kolben dieser Kolben-/Zylindereinheiten 316 auf ein Niveau angehoben, auf welchem der Träger 314 nur noch über das nachgiebige Verbindungselement 313 mit dem oberen Einlauf 5b des Transportbehälters 5 verbunden ist (Fig. 7). Das Verschlußorgan 304 der Dosieröffnung 303 der Dosiereinheit 3 kommt dabei außenseitig an dem etwa kongruenten Verschlußorgan 311 der Aufnahmeöffnung 312 des Transportbehälters 5 zur Anlage; die Dosieröffnung 303 ist mit der Aufnahmeöffnung 312 verbunden. Der Transportbehälter 5 hat nun folglich an die Dosiereinheit 3 angedockt, wobei jegliche Kraftnebenschlüsse zwischen der Dosiereinheit 3 und dem Transportbehälter 5 aufgrund der Nachgiebigkeit des Verbindungselementes 313 unterbunden sind. Wie der Fig. 8 zu entnehmen ist, wird nun die Dosieröffnung 303 gemeinsam mit der Aufnahmeöffnung 312 geöffnet, indem die miteinander gekoppelten Verschlußorgane 304, 311 aus ihrer (oberen) Schließstellung (Fig. 7) in ihre (untere) Öffnungsstellung verlagert werden (Fig. 8). Dies kann einerseits durch synchronisiertes Verfahren der Kolben-/Zylindereinheiten 305, 317 geschehen, wobei es insbesondere auch vorteilhaft sein kann, wenn eine Kolben-/Zylindereinheit - z.B. die untere 317 des Transportbehälters 5 - von einer in Richtung der Schließstellung - hier nach oben - vorbelasteten Fluidfeder oder einer beliebigen andersartigen, z.B. mechanischen, Feder gebildet ist, welche durch Betätigen der Kolben-/Zylindereinheit 305 entgegen ihrer Vorbelastung komprimiert wird, um das Verschlußorgan 311 des Transportbehälters 5 mit demjenigen 304 der Dosiereinheit 3 in Kontakt zu halten. Nachdem auf diese Weise eine Verbindung zwischen der Dosiereinheit 3 und dem Transportbehälter 5 hergestellt worden ist, wird die Förderschnecke 307 der Dosiereinheit 3 rotiert, wodurch das Schüttgut aus der Dosiereinheit 3 in den Transportbehälter 5 überführt wird, wie es in Fig. 8 durch Pfeile angedeutet ist.

Hat die dem Transportbehälter 5 zugeordnete Wiegeeinrichtung, auf deren Wäge-/Führungssegmenten 4b er während des oben erläuterten Dosiervorgangs getragen ist, die gewünschte Menge an dosiertem Schüttgut erfaßt, so wird die Förderschnecke 307 angehalten und werden die Verschlußorgane 304, 311 wieder durch Betätigen der entsprechenden Kolben-/Zylindereinheiten 305, 317 in ihre (obere) Schließstellung verbracht; die Situation entspricht insoweit wieder der gemäß Fig. 7. Anschließend wird der Träger 314 mit der Aufnahmeöffnung 312 mittels der Kolben-/Zylindereinheiten 316 wieder in seine auf dem Einlauf 5b des Transportbehälters 5 aufliegende Position verlagert (Fig. 6), wonach die expandierten Kolben dieser Kolben-/Zylindereinheiten 316 den Träger 314 freigeben und in ihre in den Zylinder eingezogene Position zurückfahren (Fig. 5). Der Transportbehälter 5 ist nun folglich wieder gänzlich von der Dosiereinheit 3 abgedockt. Der Transportbehälter 5 kann schließlich mittels des Shuttles 10 zu der Dosiereinheit 3 eines weiteren Vorratsbehälters 2 (Fig. 1) oder zu einer Entleerstation (nicht gezeigt) verfahren werden, an welcher die entsprechend der gewünschten Rezeptur zusammengestellte Mischung an Schüttgütern dem Transportbehälter 5 entnommen und gegebenenfalls an weitere Verarbeitungsstationen, wie eine Portionierungs-, Verpackungsstation etc., übergeben wird.

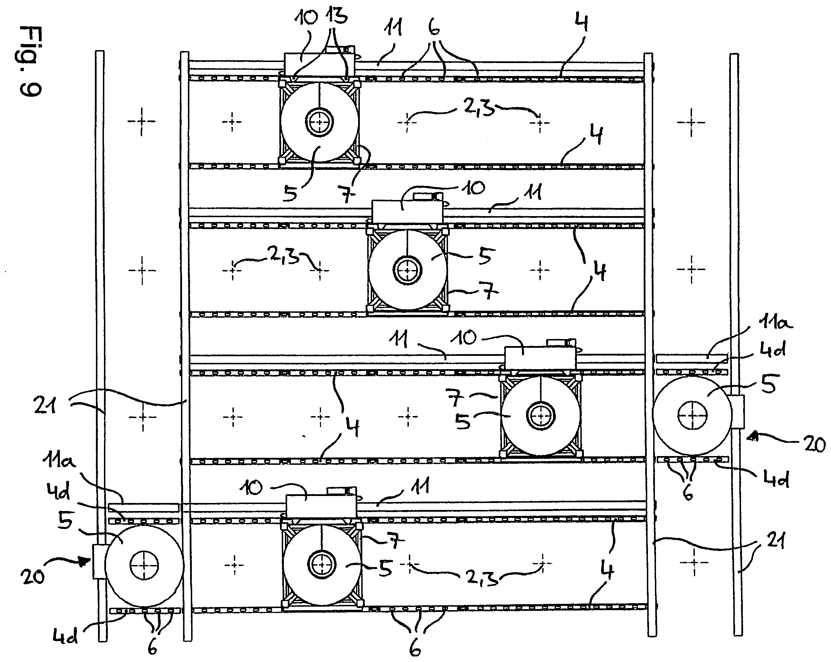

Fig. 9 zeigt ein Ausführungsbeispiel einer erfindungsgemäßen Anlage, bei welchem mehrere - hier vier - Reihen von lediglich mit einem Kreuz skizzierten Vorratsbehältern 2 mit jeweils einer Dosiereinheit 3 zur Aufnahme von insbesondere unterschiedlichen Schüttgutkomponenten vorgesehen sind. Je eine der Fig. 1 bis 4 entsprechende Führung 4 erstreckt sich jeweils unter je einer Reihe von Vorratsbehältern 2 und etwa parallel zueinander. Entsprechendes gilt für die Führung 4 einer jeden Reihe zugeordnete Schiene 11 des Shuttles 10, wobei beim vorliegenden Ausführungsbeispiel jede Reihe mit einem Shuttle 10 ausgestattet ist. Die Wäge-/Führungssegmente 4b (Fig. 3) der einem jeden Vorratsbehälter 2 zugeordneten Wiegeeinrichtungen sind wiederum unterhalb der jeweiligen Vorratsbehälter 2 angeordnet, so daß der jeweilige Transportbehälter 5 in den in Fig. 9 dargestellten Dosierpositionen hierauf getragen ist.

An wenigstens einem - hier an beiden - Enden der Führungen 4 ist eine Umsetzeinrichtung 20 angeordnet, welche zum Umsetzen der Transportbehälter 5 zwischen den Reihen von Führungen 4 dient. Die Umsetzeinrichtungen 20 sind auf sich quer, insbesondere etwa senkrecht, zu den Reihen von Führungen 4 erstreckenden Schienen 21 oder Fahrspuren geführt, was zweckmäßig mittels eines steuerbaren Antriebs (nicht dargestellt) der Umsetzeinrichtungen 20 erfolgt. Beim gezeigten Ausführungsbeispiel ist die in Fig. 9 linke Umsetzeinrichtung 20 in eine Position verfahren worden, in welcher sie auf der unteren Führung 4 verfahrene Transportbehälter 5 aufzunehmen vermag, während die in Fig. 9 rechte Umsetzeinrichtung 20 in eine Position verfahren worden ist, in welcher sie entlang der zweituntersten Führung 4 verfahrene Transportbehälter 5 aufnehmen kann. Die Umsetzeinrichtungen 20 sind hierzu ihrerseits mit einem Paar parallel angeordneter Führungssegmente 4d ausgestattet, deren Aufbau im wesentlichen den Führungssegmenten bzw. Wäge-/Führungssegmenten 4a, 4b, 4c (Fig. 4) der Führungen 4 entspricht und die somit ebenfalls vorzugsweise mit Rollen 6 ausgestattet sind, wobei die Umsetzeinrichtungen 20 sich in Fig. 9 in einer solchen Position befinden, in welcher ihre Führungssegmente 4d mit denen der Führungen 4 fluchten, so daß jeweils eine durchgehende Führung für die jeweiligen Transportbehälter 5 gebildet ist. Die Führungssegmente 4d der Umsetzeinrichtungen 20 können als "reine" Führungssegmente oder - sofern gewünscht - als Wäge-/Führungssegmente ausgebildet sein. Entsprechend umfassen die Umsetzeinrichtungen 20 ein mit den Schienen 11 der Reihen von Führungen 4 in der gezeigten Position fluchtendes Schienenstück 11a, so daß auch das jeweilige Shuttle 10 in der in Fig. 9 gezeigten Position zwischen den Schienen 11 und dem Schienenstück 11a der Umsetzeinrichtungen 20 hin und her fahren kann, um Transportbehälter 5 von der jeweiligen Führung 4 auf die Umsetzeinrichtung 20 und von dieser auf die jeweilige Führung 4 zu transportieren.

Eine solche Ausgestaltung mit mehreren Reihen von Vorratsbehältern 2 und wenigstens einer Umsetzeinrichtung 20 kann gegenüber einer lediglich linearen Aneinanderreihung von Vorratsbehältern 2 nicht nur platzsparender sein, sondern vermag insbesondere auch eine Blockierung der Führung 4 durch mehrere Transportbehälter 5, z.B. während ihres Dosiervorgangs, zu verhindern, indem die Transportbehälter 5 entlang der parallelen Führungen 4 einander "ausweichen" können. Die Bewegungsrichtung der Transportbehälter 5 kann in vorteilhafter Ausgestaltung fest vorgegeben werden, wobei die Bewegungsrichtung der Transportbehälter 5 entlang der Reihen von Führungen 4 beispielsweise jeweils S-förmig gewählt werden kann, d.h. in der ersten und dritten Reihe von links nach rechts bzw. von rechts nach links und in der zweiten und vierten Reihe von rechts nach links bzw. von links nach rechts.

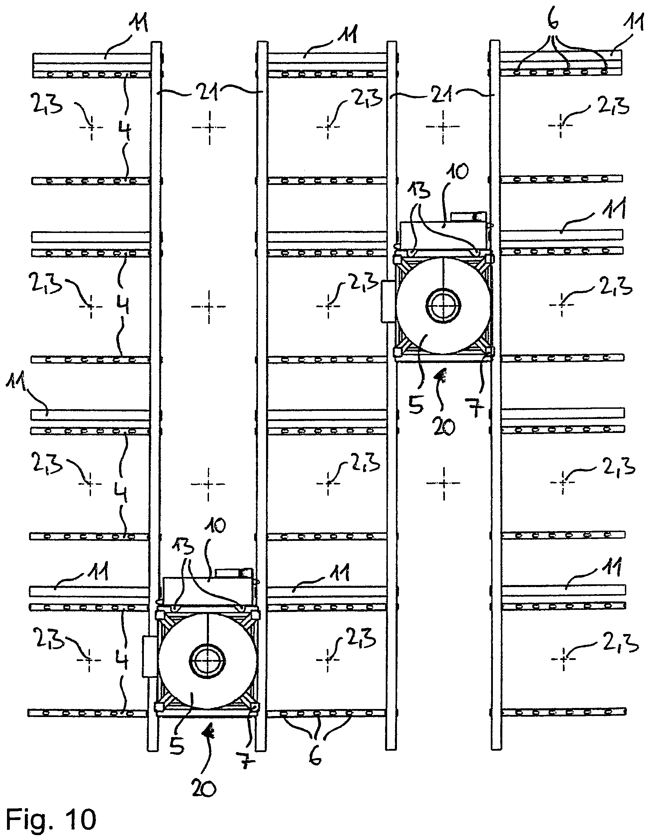

Die in Fig. 10 dargestellte Ausführungsform einer erfindungsgemäßen Anlage unterscheidet sich von der gemäß Fig. 9 vornehmlich durch die Anordnung der - im übrigen beispielweise identischen - Umsetzeinrichtungen 20, welche sich hier nicht an den Enden einer jeden Führung 4, sondern quer durch die Reihen an Führungen 4 hindurch erstreckt, wobei beim vorliegenden Ausführungsbeispiel jeweils ein Vorratsbehälter 2 mit Dosiereinheit zu beiden Seiten der Schienen 21 der Umsetzeinrichtungen 20 angeordnet ist. Die Führungen 4 können in diesem Fall ausschließlich Wäge-/Führungssegmente 4b (Fig. 4) aufweisen. Die Hauptbewegungsrichtung der Transportbehälter 5 kann in diesem Fall z.B. gegenüber der in Fig. 9 wiedergegebenen Ausgestaltung um 90° gedreht sein, d.h. sie erstreckt sich in Verlagerungsrichtung der Umsetzeinrichtungen 20 entlang der Schienen 21, wobei der jeweilige Transportbehälter 5 mittels des Shuttels 10 den jeweiligen Vorratsbehältern 1 zu beiden Seiten der Schienen 21 zugeführt werden kann.

## Patentansprüche

1. Anlage zum gravimetrischen Zusammenführen einzelner Schüttgutkomponenten in wenigstens einen Transportbehälter (5), mit mehreren Vorratsbehältern (2) zur Bevorratung der Schüttgutkomponenten, welche mit je einer Dosiereinheit (3) ausgestattet sind, um die jeweilige Schüttgutkomponente in den Transportbehälter (5) zu überführen, wobei den Vorratsbehältern (2) jeweils eine unterhalb eines jeweiligen Vorratsbehälters (2) angeordnete Wiegeeinrichtung zugeordnet ist, und mit wenigstens einem Transportbehälter (5), welcher zwischen den Dosiereinheiten (3) der Vorratsbehälter (2) entlang einer Führung (4) verfahrbar ist und mit den Wiegeeinrichtungen zusammenwirkt, wobei
- die Führung (4) mehrere, in Führungsrichtung hintereinander angeordnete Führungssegmente (4a, 4b, 4c) aufweist, auf welchen der Transportbehälter (5) geführt ist, und
- zumindest die unterhalb der Dosiereinheiten (3) der Vorratsbehälter (2) angeordneten Führungssegmente (4a, 4b, 4c) von Wäge-/Führungssegmenten (4b) gebildet sind, welche von den übrigen Führungssegmenten (4a, 4b, 4c) und/oder Wäge-/Führungssegmenten (4b) mechanisch entkoppelt sind, so daß sich der Transportbehälter (5) in seiner jeweiligen Dosierposition auf den Wäge-/Führungssegmenten (4b) befindet, um sein Gewicht zu erfassen;
**dadurch gekennzeichnet, daß** zur Verlagerung des/der Transportbehälter(s) (5) entlang der Führung (4) wenigstens ein gesteuert angetriebener Schlitten (10) vorgesehen ist, welcher an einer sich parallel zu einer Reihe der Führungs- bzw. Wäge-/Führungssegmente (4a, 4b, 4c) erstreckenden Schiene (11) geführt und mittels Mitnehmern (13) mit dem/den Transportbehälter(n) (5) koppelbar und von diesem/diesen entkoppelbar ist, so daß der Transportbehälter (5) unter Eingriff mit dem Schlitten (10) entlang der parallelen Führungs- bzw. Wäge-/Führungssegmente (4a, 4b, 4c) verlagerbar ist.

2. Anlage nach Anspruch 1, **dadurch gekennzeichnet, daß** die Wäge-/Führungssegmente (4b) und insbesondere auch die Führungssegmente (4a, 4b, 4c) paarweise parallel zueinander angeordnet sind.

3. Anlage nach Anspruch 1 oder 2, **dadurch gekennzeichnet, daß** die Führungssegmente (4a, 4b, 4c) und die Wäge-/ Führungssegmente (4b) von Spurabschnitten gebildet sind, welche an ihrer Oberseite eine Führungsspur für Führungsmittel (8a, 8b) des Transportbehälters (5) bilden.

4. Anlage nach Anspruch 3, **dadurch gekennzeichnet, daß** die Führungsspur der Spurabschnitte oder die Führungsmittel (8a, 8b) des Transportbehälters (5) mit Roll- (6) oder Gleitmitteln ausgestattet sind.

5. Anlage nach einem der Ansprüche 1 bis 4, **dadurch gekennzeichnet, daß** der Schlitten (10) auf einer Schiene (11) geführt ist.

6. Anlage nach einem der Ansprüche 1 bis 5, **dadurch gekennzeichnet, daß** der Schlitten (10) wenigstens zwei in Führungsrichtung mit Abstand angeordnete Mitnehmer (13) aufweist, welche mit dem/den Transportbehälter(n) (5) koppelbar und von diesem/diesen entkoppelbar sind.

7. Anlage nach einem der Ansprüche 1 bis 6, **dadurch gekennzeichnet, daß** Blockiereinrichtungen für den/die Transportbehälter (5) vorgesehen sind, um diese(n) in seiner/ihrer jeweiligen Dosierposition festsetzen zu können.

8. Anlage nach einem der Ansprüche 1 bis 7, **dadurch gekennzeichnet, daß** sie mehrere Transportbehälter (5) und insbesondere auch mehrere Schlitten (10) aufweist.

9. Anlage nach einem der Ansprüche 1 bis 8, **dadurch gekennzeichnet, daß** der Transportbehälter (5) eine den Dosiereinheiten (3) der Vorratsbehälter (2) zugewandte, verschließbare Aufnahmeöffnung (312) aufweist und die Dosiereinheiten (3) eine dem Transportbehälter (5) zugewandte, verschließbare Dosieröffnung (303) aufweisen, wobei die Aufnahmeöffnung (312) mit der jeweiligen Dosieröffnung (303) anläßlich der Überführung der jeweiligen Schüttgutkomponente von dem jeweiligen Vorratsbehälter (2) in den Transportbehälter (5) in Deckung bringbar ist.

10. Anlage Anspruch 9, **dadurch gekennzeichnet, daß** die Dosieröffnung (303) der Dosiereinheit (3) mit der Aufnahmeöffnung (312) des Transportbehälters (5) lösbar, aber unter mechanischer Entkopplung der Dosiereinheit (3) von dem Transportbehälter (5) im wesentlichen staubdicht verbindbar ist.

11. Anlage nach Anspruch 10, **dadurch gekennzeichnet, daß** die Dosieröffnung (303) der Dosiereinheit (3) und/oder die Aufnahmeöffnung (312) des Transportbehälters (5) mittels eines nachgiebigen Verbindungselementes (313) an der Dosiereinheit (3) bzw. an dem Transportbehälter (5) angeordnet ist/sind, um eine Übertragung von Kräften zwischen der Dosiereinheit (3) und dem Transportbehälter (5) verhindern zu können, wobei die miteinander verbundenen Dosier-/Aufnahmeöffnungen (303, 312) in eine solche Relativposition in Bezug auf die Dosiereinheit (3) bzw. auf den Transportbehälter (5) anordbar sind, daß eine Übertragung von Kräften zwischen der Dosiereinheit (3) und dem Transportbehälter (5) durch das nachgiebige Verbindungselement (313) verhindert wird.

12. Anlage nach Anspruch 10 oder 11, **dadurch gekennzeichnet, daß** die Dosieröffnung (303) und/oder die Aufnahmeöffnung (312) an einem im wesentlichen senkrecht zur Dosieröffnung (303) bzw. im wesentlichen senkrecht zur Aufnahmeöffnung (312) verlagerbaren Träger (314) angeordnet ist/sind und der Träger (314) mit der Dosiereinheit (3) und/oder mit dem Transportbehälter (5) über das nachgiebige Verbindungselement (313) verbunden ist, wobei der Träger (314) in eine Relativposition in Bezug auf die Dosiereinheit (3) bzw. auf den Transportbehälter (5) bringbar ist, in welcher der Träger (314) ausschließlich über das nachgiebige Verbindungselement (313) mit der Dosiereinheit (3) bzw. mit dem Transportbehälter (5) in Kontakt steht.

13. Anlage nach einem der Ansprüche 9 bis 12, **dadurch gekennzeichnet, daß** ein Verschlußorgan (304) der Dosieröffnung (303) mit einem Verschlußorgan (311) der Aufnahmeöffnung (312) koppelbar ist und die Verschlußorgane (304, 311) gemeinsam zwischen einer Öffnungsposition und einer Schließposition verlagerbar sind.

14. Anlage nach einem der Ansprüche 1 bis 13, **dadurch gekennzeichnet, daß** die Vorratsbehälter (2) in wenigstens einer Reihe entlang der Führung (4) angeordnet sind.

15. Anlage nach einem der Ansprüche 1 bis 14, **dadurch gekennzeichnet, daß** die Vorratsbehälter (2) in wenigstens zwei Reihen entlang wenigstens zweier Führungen (4) angeordnet sind, wobei den wenigstens zwei Führungen (4) wenigstens eine Umsetzeinrichtung (20) zugeordnet ist, welche zum Umsetzen des/der Transportbehälter(s) (5) zwischen den Führungen (4) ausgebildet ist.

16. Anlage nach Anspruch 15, **dadurch gekennzeichnet, daß** die Umsetzeinrichtung (20) auf im wesentlichen quer zu den Führungen (4) verlaufenden Schienen (21) oder Fahrspuren geführt ist.

17. Anlage nach Anspruch 15 oder 16, **dadurch gekennzeichnet, daß** die Umsetzeinrichtung (20) ihrerseits wenigstens ein Führungssegment (4d) aufweist, welches mit den Führungssegmenten (4a, 4b, 4c) und/oder Wäge-/Führungssegmenten (4b) der wenigstens zwei Führungen (4) in Flucht bringbar ist, so daß der Transportbehälter (5) zwischen den Führungssegmenten (4a, 4b, 4c) und/oder Wäge-/Führungssegmenten (4b) der wenigstens zwei Führungen (4) und dem Führungssegment (4d) der Umsetzeinrichtung (20) verlagerbar ist.

18. Anlage nach einem der Ansprüche 1 bis 17, **dadurch gekennzeichnet, daß** die Führung (4) hängend angeordnet ist.

## Claims

1. System for gravimetrically combining individual bulk material components in at least one transport container (5), comprising a plurality of storage containers (2) for storing the bulk material components, each being equipped with one dosing unit (3) in order to transfer the respective bulk material component into the transport container (5), wherein each storage container (2) is associated with one weighing means disposed below each storage container (2), and at least one transport container (5), which can be moved between the dosing units (3) of the supply containers (2) along a guidance (4) and cooperates with the weighing means, wherein
- the guidance (4) comprises several guiding segments (4a, 4b, 4c) that are disposed behind one another in the guiding direction and on which the transport container (5) is guided; and
- at least the guiding segments (4a, 4b, 4c) being disposed below the dosing units (3) of the supply containers (2) are formed by weighing/guiding segments (4b), which are mechanically decoupled from the other guiding segments (4a, 4b, 4c) and/or weighing/guiding segments (4b), such that the transport container (5) is in its respective dosing position when being positioned on the weighing/guiding segments (4b) for detecting its weight,
**characterised in that** at least one controlled driven carriage (10) is provided for displacing the transport container(s) (5) along the guidance (4), the carriage (10) being guided on a rail (11) which extends parallel to a row of the paired guiding or weighing/guiding segments (4a, 4b, 4c), respectively, and can be coupled to the transport container(s) (5) and decoupled therefrom by means of carriers (13), such that the transport container (5) is displaceable along the parallel guiding or weighing/guiding segments (4a, 4b, 4c), respectively, while being engaged with the shuttle (10).

2. System according to claim 1, **characterised in that** the weighing/guiding segments (4b) and, in particular, also the guiding segments (4a, 4b, 4c) are disposed in pairs parallel to each other.

3. System according to claim 1 or 2, **characterised in that** the guiding segments (4a, 4b, 4c) and the weighing/guiding segments (4b) are formed by track sections, which form on their upper sides a guiding track for guiding means (8a, 8b) of the transport container (5).

4. System according to claim 3, **characterised in that** the guiding track of the track sections or the guiding means (8a, 8b) of the transport container (5) are provided with rolling (6) or sliding means.

5. System according to any one of the claims 1 through 4, **characterised in that** the carriage (10) is guided on a rail (11).

6. System according to any one of the claims 1 to 5, **characterised in that** the carriage (10) has at least two carriers (13), which are disposed at a separation from each other in the guiding direction and can be coupled to and be decoupled from the transport container(s) (5).

7. System according to any one of the claims 1 through 6, **characterised in that** blocking means for the transport container(s) (5) are provided for fixing the transport container(s) in its/their respective dosing position.

8. System according to any one of the claims 1 through 7, **characterised in that** it has several transport containers (5) and, in particular, also several shuttles (10).

9. System according to any one of the claims 1 through 8, **characterised in that** the transport container (5) has a receiving opening (312) which faces the dosing units (3) of the supply containers (2) and can be closed, and the dosing units (3) have a dosing opening (303) which faces the transport container (5) and can be closed, wherein the receiving opening (312) and the respective dosing opening (303) can be moved to coincide during transfer of the respective bulk material component from the respective supply container (2) into the transport container (5).

10. System according to claim 9, **characterised in that** the dosing opening (303) of the dosing unit (3) can be detachably connected to the receiving opening (312) of the transport container (5), however, in a substantially dust-free fashion, with the dosing unit (3) thereby being mechanically decoupled from the transport container (5).

11. System according to claim 10, **characterised in that** the dosing opening (303) of the dosing unit (3) and/or the receiving opening (312) of the transport container (5) is/are disposed on the dosing unit (3) or on the transport container (5) by means of a resilient connecting element (313) for preventing transfer of forces between the dosing unit (3) and the transport container (5), wherein the interconnected dosing/receiving openings (303, 312) can be arranged in a relative position with respect to the dosing unit (3) or on the transport container (5) such that transfer of forces between the dosing unit (3) and the transport container (5) is prevented by the resilient connecting element (313).

12. System according to claim 10 or 11, **characterised in that** the dosing opening (303) and/or the receiving opening (312) is/are arranged on a support (314) which can be displaced substantially perpendicularly with respect to the dosing opening (303) or substantially perpendicularly with respect to the receiving opening (312), the support (314) being connected to the dosing unit (3) and/or to the transport container (5) via the resilient connecting element (313), wherein the support (314) can be moved into a relative position with respect to the dosing unit (3) or to the transport container (5), in which position the support (314) is in contact with the dosing unit (3) or the transport container (5) exclusively via the resilient connecting element (313).

13. System according to any one of the claims 9 through 12, **characterised in that** a closure element (304) of the dosing opening (303) can be coupled to a closure element (311) of the receiving opening (312) and the closure elements (304, 311) can be displaced together between an open position and a closed position.

14. System according to any one of the claims 1 through 13, **characterised in that** the supply containers (2) are arranged in at least one row along the guidance (4).

15. System according to any one of the claims 1 through 14, **characterised in that** the supply containers (2) are arranged in at least two rows along at least two guidances (4), wherein the at least two guidances (4) are associated with at least one relocating means (20), which is designed for relocating the transport container(s) (5) between the guidances (4).

16. System according to claim 15, **characterised in that** the relocating means (20) is guided on rails (21) or tracks, which extend substantially transversely to the guidances (4).

17. System according to claim 15 or 16, **characterised in that** the relocating means (20) itself has at least one guiding segment (4d), which can be aligned with the guiding segments (4a, 4b, 4c) and/or weighing/guiding segments (4b) of the at least two guidances (4) such that the transport container (5) can be displaced between the guiding segments (4a, 4b, 4c) and/or weighing/guiding segments (4b) of the at least two guidances (4) and the guiding segment (4d) of the relocating means (20).

18. System according to any one of the claims 1 through 17, **characterised in that** the guidance (4) is arranged to be suspended.

## Revendications

1. Installation d'assemblage gravimétrique de composants de produit en vrac individuels dans au moins un récipient de transport (5), avec plusieurs récipients de réserve (2) pour stocker les composants de produit en vrac, lesdits récipients étant respectivement équipés d'une unité de dosage (3), pour transférer le composant de produit en vrac respectif dans le récipient de transport (5), un dispositif de pesée disposé sous un récipient de réserve (2) respectif étant respectivement associé aux récipients de réserve (2), et avec au moins un récipient de transport (5), ledit récipient de transport pouvant être déplacé entre les unités de dosage (3) le long d'un guide (4) et interagissant avec les dispositifs de pesée ;
- le guide (4) comportant plusieurs segments de guidage (4a, 4b, 4c) disposés les uns derrière les autres dans la direction de guidage sur lesquels le récipient de transport (5) est guidé ; et
- au moins les segments de guidage (4a, 4b, 4c) disposés sous les unités de dosage (3) des récipients de réserve (2) étant formés par des segments de pesée/guidage (4b) découplés de façon mécanique des segments de guidage (4a, 4b, 4c) et/ou des segments de pesée/guidage (4b) restants, de sorte que le récipient de transport (5) se trouve sur les segments de pesée/guidage (4b) dans sa position de dosage respective, pour déterminer son poids ;
**caractérisée en ce que** pour déplacer le ou les récipient(s) de transport (5) le long du guide (4), au moins un coulisseau (10) entraîné de façon commandée est prévu, ce coulisseau étant guidé au niveau d'un rail (11) s'étendant parallèlement à une rangée de segments de guidage et/ou de pesée/guidage (4a, 4b, 4c) et pouvant être couplé au(x) récipient(s) de transport (5) et en être découplé à l'aide de doigts d'entraînement (13), de sorte que le récipient de transport (5) puisse être déplacé en prise avec le coulisseau (10) le long des segments de guidage et/ou de pesée/guidage (4a, 4b, 4c) parallèles.

2. Installation selon la revendication 1, **caractérisée en ce que** les segments de pesée/guidage (4b) et notamment également les segments de guidage (4a, 4b, 4c) sont disposés par paire parallèlement les uns par rapport aux autres.

3. Installation selon la revendication 1 ou 2, **caractérisée en ce que** les segments de guidage (4a, 4b, 4c) et les segments de pesée/guidage (4b) sont formés par des sections de voie formant au niveau de leur côté supérieur une voie de guidage pour les moyens de guidage (8a, 8b) du récipient de transport (5).

4. Installation selon la revendication 3, **caractérisée en ce que** la voie de guidage des sections de voie ou les moyens de guidage (8a, 8b) du récipient de transport (5) sont équipés de moyens de roulement (6) ou de glissement.

5. Installation selon l'une quelconque des revendications 1 à 4, **caractérisée en ce que** le coulisseau (10) est guidé sur un rail (11).

6. Installation selon l'une quelconque des revendications 1 à 5, **caractérisée en ce que** le coulisseau (10) comporte au moins deux doigts d'entraînement (13) disposés à une certaine distance l'un de l'autre dans la direction de guidage, ces doigts pouvant être couplés au(x) récipient(s) de transport (5) et en être découplés.

7. Installation selon l'une quelconque des revendications 1 à 6, **caractérisée en ce que** des dispositifs de blocage sont prévus pour le(s) récipient(s) de transport (5), pour permettre de le(s) fixer dans sa/leur position de dosage respective.

8. Installation selon l'une quelconque des revendications 1 à 7, **caractérisée en ce qu'**elle comporte plusieurs récipients de transport (5) et notamment également plusieurs coulisseaux (10).

9. Installation selon l'une quelconque des revendications 1 à 8, **caractérisée en ce que** le récipient de transport (5) comporte une ouverture de réception (312) pouvant être fermée orientée vers les unités de dosage (3) des récipients de réserve (2) et que les unités de dosage (3) comportent une ouverture de dosage (303) pouvant être fermée orientée vers le récipient de transport (5), l'ouverture de réception (312) pouvant être abritée par l'ouverture de dosage (303) respective à l'occasion du transfert du composant de produit en vrac respectif du récipient de réserve (2) respectif dans le récipient de transport (5).

10. Installation selon la revendication 9, **caractérisée en ce que** l'ouverture de dosage (303) de l'unité de dosage (3) peut être reliée à l'ouverture de réception (312) du récipient de transport (5) de façon amovible, mais avec découplage mécanique de l'unité de dosage (3) par rapport au récipient de transport (5), pour l'essentiel de façon étanche à la poussière.

11. Installation selon la revendication 10, **caractérisée en ce que** l'ouverture de dosage (303) de l'unité de dosage (3) et/ou l'ouverture de réception (312) du récipient de transport (5) est/sont disposé(s), à l'aide d'un élément de liaison (313) souple, au niveau de l'unité de dosage (3) et/ou au niveau du récipient de transport (5), pour permettre d'empêcher une transmission de forces entre l'unité de dosage (3) et le récipient de transport (5), les ouvertures de dosage et réception (303, 312) reliées entre elles pouvant être agencées dans une telle position relative par rapport à l'unité de dosage (3) et/ou sur le récipient de transport (5) qu'une transmission de forces est entravée entre l'unité de dosage (3) et le récipient de transport (5) du fait de l'élément de liaison (313) souple.

12. Installation selon la revendication 10 ou 11, **caractérisée en ce que** l'ouverture de dosage (303) et/ou l'ouverture de réception (312) est/sont disposé(s) au niveau d'un support (314) pouvant être déplacé pour l'essentiel perpendiculairement à l'ouverture de dosage (303) et/ou pour l'essentiel perpendiculairement à l'ouverture de réception (312) et que le support (314) est relié à l'unité de dosage (3) et/ou au récipient de transport (5) via l'élément de liaison (313) souple, le support (314) pouvant être amené dans une position relative, par rapport à l'unité de dosage (3) et/ou sur le récipient de transport (5), dans laquelle le support (314) est exclusivement en contact, via l'élément de liaison (313) souple, avec l'unité de dosage (3) et/ou avec le récipient de transport (5).

13. Installation selon l'une quelconque des revendications 9 à 12, **caractérisée en ce qu'**un organe de fermeture (304) de l'ouverture de dosage (303) peut être couplé à un organe de fermeture (311) de l'ouverture de réception (312) et que les organes de fermeture (304, 311) sont déplacés ensemble entre une position d'ouverture et une position de fermeture.

14. Installation selon l'une quelconque des revendications 1 à 13, **caractérisée en ce que** les récipients de réserve (2) sont disposés sur au moins une rangée le long du guide (4).

15. Installation selon l'une quelconque des revendications 1 à 14, **caractérisée en ce que** les récipients de réserve (2) sont disposés dans au moins deux rangées le long d'au moins deux guides (4), au moins un dispositif de déplacement (20) étant associé aux au moins deux guides (4), ce dispositif étant réalisé pour déplacer le(s) récipient(s) de transport (5) entre les guides (4).

16. Installation selon la revendication 15, **caractérisée en ce que** le dispositif de déplacement (20) est guidé sur les rails (21) ou voies de circulation s'étendant pour l'essentiel transversalement aux guides (4).

17. Installation selon la revendication 15 ou 16, **caractérisée en ce que** le dispositif de déplacement (20) comporte pour sa part au moins un segment de guidage (4d) pouvant être amené en alignement avec les segments de guidage (4a, 4b, 4c) et/ou les segments de pesée/guidage (4b) des au moins deux guides (4), de sorte que le récipient de transport (5) puisse être déplacé entre les segments de guidage (4a, 4b, 4c) et/ou les segments de pesée/guidage (4b) des au moins deux guides (4) et le segment de guidage (4d) du dispositif de déplacement (20).

18. Installation selon l'une quelconque des revendications 1 à 17, **caractérisée en ce que** le guide (4) est disposé de façon à être accroché.
